# EUROPÄISCHE PATENTSCHRIFT

(11) **EP 3 533 650 B1**
(45) Veröffentlichungstag und Bekanntmachung des Hinweises auf die Patenterteilung: **24.06.2020**
(21) Anmeldenummer: 18159688.3
(22) Anmeldetag: 02.03.2018
(51) Int. Cl.: B60K 15/04, B60K 15/03

(54) **KRAFTSTOFFBEFÜLLVORRICHTUNG**
FUEL FILLING DEVICE
DISPOSITIF DE REMPLISSAGE DE CARBURANT

(43) Veröffentlichungstag der Anmeldung: 04.09.2019
(73) Patentinhaber: Magna Steyr Fuel Systems GesmbH, 8261 Sinabelkirchen (AT)
(72) Erfinder: FUCHS, Thomas, 8261 Sinabelkirchen (AT)
(74) Vertreter: Zangger, Bernd

(56) Entgegenhaltungen:
- DE-A1- 19 948 312
- DE-A1-102015 214 084
- JP-A- 2015 143 043

## Beschreibung

### Gebiet der Erfindung

Die vorliegende Erfindung betrifft eine Kraftstoffbefüllvorrichtung, umfassend einen Befüllleitung, eine in der Befüllleitung angeordnete Strömungsleiteinrichtung, wobei die Strömungsleiteinrichtung so ausgebildet ist, dass während einer Betankung das Auslaufrohr einer Zapfpistole in dieser geführt und abgestützt aufgenommen ist und einen Aufsatz für die Strömungsleiteinrichtung.

### Stand der Technik

In der DE102008011733A1 ist eine Kraftstoffbefüllvorrichtung beschrieben, welche ein Lenkrohr aufweist, welche eine laminare Strömung des Kraftstoffs während dem Betanken begünstigen soll, wodurch ein Zurückspritzen des Kraftstoffs auch beim Nachfüllen vermindert werden soll. Eine Kraftstoffbefüllvorrichtung mit den Merkmalen des Oberbegriffs des Anspruchs 1 ist aus der DE 199 48 312 A1 bekannt.

### Zusammenfassung der Erfindung

Es ist eine Aufgabe der Erfindung, ein alternatives Betankungssystem bereitzustellen mit welchem einerseits das Zurückspritzen von Kraftstoff während dem Betanken einerseits verhindert und die Einhaltung der ORVR (Onboard Refueling Vapor Recovery) Anforderungen andererseits ermöglicht wird.

Die Lösung der Aufgabe erfolgt durch eine Kraftstoffbefüllvorrichtung mit den Merkmalen gemäß Anspruch 1.

Erfindungsgemäß ist eine Kraftstoffbefüllvorrichtung, umfassend einen Befüllleitung, eine in der Befüllleitung angeordnete Strömungsleiteinrichtung, wobei die Strömungsleiteinrichtung so ausgebildet ist, dass während einer Betankung das Auslaufrohr einer Zapfpistole in dieser geführt und abgestützt aufgenommen ist und einen Aufsatz für die Strömungsleiteinrichtung, wobei der Aufsatz ein erstes Ende aufweist, welches radial außen an der Strömungsleiteinrichtung angeordnet ist, wobei der Aufsatz ein zweites Ende aufweist, wobei sich der Aufsatz vom ersten Ende zum zweiten Ende hin über eine Verjüngung verjüngt, wobei zwischen dem ersten Ende des Aufsatzes und der Strömungsleiteinrichtung zumindest ein Spalt ausgebildet ist, so dass der während der Betankung in die Kraftstoffbefüllvorrichtung eingeleitete Kraftstoffdampf während einer Betankung durch den zumindest einen Spalt in die Befüllleitung in Richtung eines mit der Befüllleitung verbundenen Kraftstoffbehälters strömen kann.

Vorteilhaft weist der Aufsatz eine Vielzahl von Spalten zwischen der Strömungsleiteinrichtung und dem Aufsatz auf.

Der Spalt oder die Spalten bewirken eine Druckentlastung insbesondere beim Nachtanken, da ein im Aufsatz stehender Kraftstoff bzw. Kraftstoffdampf über die Spalten in die Befüllleitung entweichen und bevorzugt über eine Rezirkulierungsleitung in den Kraftstoffbehälter zurückgeleitet werden kann, wodurch eine Beladung eines Aktivkohlefilters (AKF), bei gleichzeitig Einhaltung des gesetzlich vorgeschriebenen ORVR, reduziert werden kann. Aufgrund der Geometrie der Verjüngung des Aufsatzes kann ein Entweichen von Kraftstoff aus der Befüllleitung bzw. der Strömungsleiteinrichtung (das sogenannte "Spitback") verhindert werden.

Die Rezirkulierungsleitung ist bevorzugt an einem ersten Ende mit einer Hauptentlüftungsleitung verbunden und mit einem zweiten Ende mit der Befüllleitung, wobei das zweite Ende in einem Bereich der Befüllleitung mündet, welcher oberhalb der Spalten angeordnet ist. Die Hauptentlüftungsleitung ist mit dem Kraftstoffbehälter verbunden, wobei Kraftstoffdampf von der Hauptentlüftungsleitung zum AKF und/oder zur Rezirkulierungsleitung strömen kann.

Während der Betankung entsteht in der Befüllleitung aufgrund der Verjüngung ein Unterdruck wodurch Kraftstoffdampf von der Hauptentlüftungsleitung über die Rezirkulierungsleitung und über die Befüllleitung in den Kraftstoffbehälter zurückgeleitet wird.

Die Strömungsleiteinrichtung und der mit der Strömungsleiteinrichtung verbundene Aufsatz sind am oberen Ende der Befüllleitung in der Befüllleitung eingesetzt und mit dieser verbunden. Die Befüllleitung, welche in einer bevorzugten Ausführungsform durch Blasformen hergestellt ist, weist am oberen Ende eine Aufweitung auf, in welche die Strömungsleiteinrichtung und der Aufsatz einsetzbar sind, und verjüngt sich bis zum zweiten Ende des Aufsatzes bis die Befüllleitung eine zylindrische Form aufweist, welche bis zum Kraftstoffbehälter im Wesentlichen unverändert bleibt. Durch diese Ausbildung der Befüllleitung wird die Sogwirkung nochmals verstärkt.

Weiterbildungen der Erfindung sind in den abhängigen Ansprüchen, der Beschreibung sowie den beigefügten Zeichnungen angegeben.

In einer bevorzugten Ausführungsform bildet das erste Ende des Aufsatzes einen im Wesentlichen zylindrisch ausgebildeten Abschnitt.

In einer vorteilhaften Ausführungsform ist im ersten Ende des Aufsatzes zumindest eine Distanzrippe angeordnet, wobei sich die Distanzrippe radial nach innen, also in Richtung zur Strömungsleiteinrichtung, erstreckt.

Im zylindrischen Abschnitt des Aufsatzes sind mehrere Distanzrippen, vorzugsweise regelmäßig zueinander beabstandet, ausgebildet.

In einer vorteilhaften Ausführungsform werden mehrere Spalte durch die Beabstandung der Distanzrippen zueinander und der Beabstandung des ersten Endes des Aufsatzes zur Strömungsleiteinrichtung aufgrund der Distanzrippen gebildet.

Aufgrund der Distanzrippen kann der Aufsatz in einer definierten Position zur Strömungsleiteinrichtung positioniert werden.

Alternativ kann anstatt von Distanzrippen in der Ringfläche des zylindrischen Abschnitts des ersten Endes des Aufsatzes durchgehende Bohrungen in axialer Richtung des zylindrischen Abschnitts vorgesehen werden.

Der Aufsatz weist zumindest eine Verrastungsgeometrie auf mittels welcher der Aufsatz in eine Gegenverrastungsgeometrie der Strömungsleiteinrichtung verbunden werden kann.

Vorteilhaft weist der Aufsatz zumindest zwei Verrastungsgeometrien auf. Dadurch wird eine bessere Verbindung zwischen dem Aufsatz und der Strömungsleiteinrichtung erzielt.

Die Verjüngung des Aufsatzes weist im Wesentlichen die Form einer Kegelstumpfmantelfläche auf.

Dabei erfüllt die Verjüngung mehrere Funktionen. Einerseits wird durch die Verjüngung erreicht, dass das Zurückspritzen des Kraftstoffs während der Betankung verhindert wird, andererseits bewirkt die Verjüngung, dass die Sogwirkung des Spalts verstärkt wird, wodurch nicht nur die gesetzlichen ORVR Anforderungen leichter erfüllt werden, sondern auch die Beladung des Aktivkohlefilters reduziert wird.

Das zweite Ende nach der Verjüngung bildet in einer weiteren vorteilhaften Ausführungsform ebenfalls einen zylindrischen Abschnitt.

Die Strömungsleiteinrichtung ist so ausgebildet, dass das Ende des Auslaufrohres der Zapfpistole nicht über die Strömungsleiteinrichtung ragen kann. Das hat den Vorteil, dass während der Betankung der Treibstoff in den aufgeweiteten Bereich der Verjüngung des Aufsatzes nicht auftreffen kann, sondern erst in dem Bereich des Aufsatzes wo das zweite Ende angeordnet ist. Von dort verteilt sich der Kraftstoff, der zurückspritzen kann, in Richtung der aufgeweiteten Verjüngung und nicht in Richtung der Einlassöffnung der Kraftstoffbefüllvorrichtung. Das erste Ende des Aufsatzes weist dabei bevorzugt eine Länge auf, so dass der zurückspritzende Kraftstoff durch den Spalt, bzw. die Spalte in Richtung des Hohlraums der Befüllleitung und nicht aus der Einlassöffnung der Strömungsleiteinrichtung gelangen kann.

### Kurzbeschreibung der Zeichnungen

Die Erfindung wird im Folgenden beispielhaft unter Bezugnahme auf die Zeichnungen beschrieben.

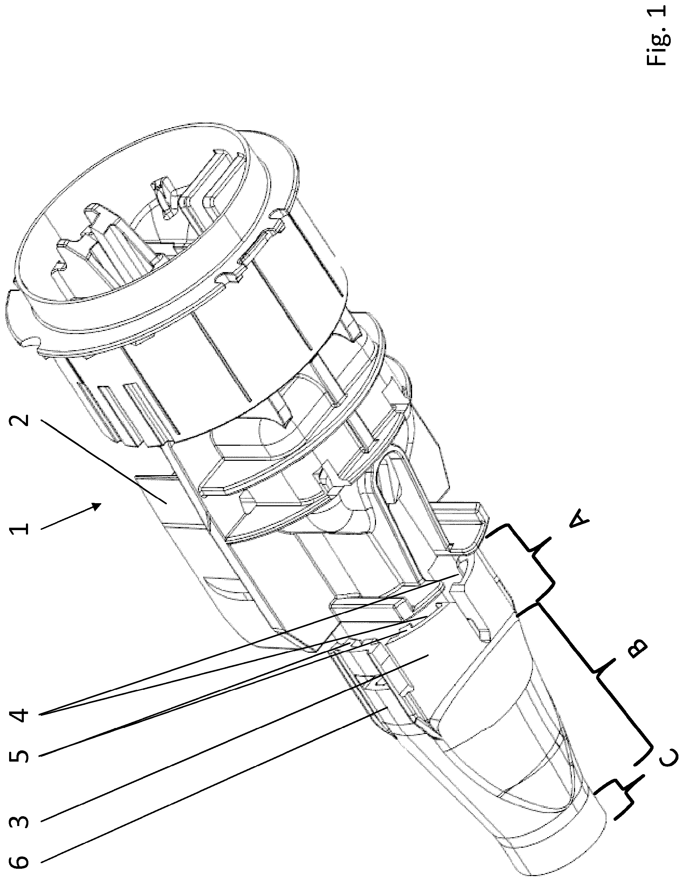

- Fig. 1: zeigt eine perspektivische Ansicht einer erfindungsgemäßen Kraftstoffbefüllvorrichtung.

### Detaillierte Beschreibung der Erfindung

In Fig. 1 ist eine Kraftstoffbefüllvorrichtung 1 in perspektivischer Ansicht dargestellt, wobei zur einfacheren Übersicht auf die Darstellung der Befüllleitung verzichtet wird. Die Kraftstoffbefüllvorrichtung 1 umfasst eine Strömungsleiteinrichtung 2, in welcher während einer Betankung das Auslaufrohr einer nicht dargestellten Zapfpistole geführt und abgestützt aufgenommen ist. Ein Aufsatz 3 ist mit der Strömungsleiteinrichtung 2 mittels einer Verrastungseinrichtung 6 verbunden. Bevorzugt erfolgt die Verrastung durch Clipsen. Es kann aber auch jede andere geeignete lösbare oder unlösbare Verbindung vorgesehen werden, beispielsweise mittels Bajonettverschluss oder durch Verschweißen. Der Aufsatz 3 weist ein erstes Ende A auf, welches im Wesentlichen zylindrisch ausgebildet ist. Das erste Ende A des Aufsatzes 3 weist mehrere Distanzrippen 5 auf welche, durch die Beabstandung der Distanzrippen 5 zueinander und der Beabstandung des zylindrischen Abschnitts des ersten Endes A des Aufsatzes 3 zur Strömungsleiteinrichtung 2 aufgrund der Distanzrippen 5 gebildet wird. Der Aufsatz 3 weist ein zweites Ende C auf, welches ebenfalls im Wesentlichen zylindrisch ausgebildet ist. Zwischen dem ersten Ende A des Aufsatzes 3 und dem zweiten Ende C des Aufsatzes 3 befindet sich eine Verjüngung B welche eine im Wesentlichen kegelstumpfförmige Mantelfläche aufweist. Die Verjüngung B des Aufsatzes 3 bewirkt zusammen mit den Spalten 4, dass ein Zurückspritzen des Kraftstoffs während dem Betanken verhindert wird und bewirkt einen zusätzlichen Saugeffekt, so dass der Kraftstoffdampf über die Spalte 4 mit dem Kraftstoff vermengt und in den Kraftstoffbehälter strömen kann.

## Patentansprüche

1. Kraftstoffbefüllvorrichtung (1), umfassend einen Befüllleitung, eine in der Befüllleitung angeordnete Strömungsleiteinrichtung (2), wobei die Strömungsleiteinrichtung (2) so ausgebildet ist, dass während einer Betankung das Auslaufrohr einer Zapfpistole in dieser geführt und abgestützt aufgenommen ist und einen Aufsatz (3) für die Strömungsleiteinrichtung (2), wobei der Aufsatz (3) ein erstes Ende (A) aufweist, welches radial außen an der Strömungsleiteinrichtung (2) angeordnet ist, wobei der Aufsatz (3) ein zweites Ende (C) aufweist, wobei sich der Aufsatz (3) vom ersten Ende (A) zum zweiten Ende (C) hin über eine Verjüngung (B) verjüngt, **dadurch gekennzeichnet, dass** zwischen dem ersten Ende (A) des Aufsatzes (3) und der Strömungsleiteinrichtung (2) zumindest ein Spalt (4) ausgebildet ist, so dass der während der Betankung in die Kraftstoffbefüllvorrichtung (1) eingeleitete Kraftstoffdampf während einer Betankung durch den zumindest einen Spalt (4) in die Befüllleitung in Richtung eines mit der Befüllleitung verbundenen Kraftstoffbehälters strömen kann.

2. Kraftstoffbefüllvorrichtung (1) nach Anspruch 1,
**dadurch gekennzeichnet, dass** das erste Ende (A) des Aufsatzes (3) einen im Wesentlichen zylindrisch ausgebildeten Abschnitt bildet.

3. Kraftstoffbefüllvorrichtung (1) nach Anspruch 1 oder 2,
**dadurch gekennzeichnet, dass** im ersten Ende (A) des Aufsatzes (3) zumindest eine Distanzrippe (5) angeordnet ist, wobei sich die Distanzrippe (5) radial nach innen, also in Richtung zur Strömungsleiteinrichtung (2), erstreckt.

4. Kraftstoffbefüllvorrichtung (1) Anspruch 3,
**dadurch gekennzeichnet, dass** im zylindrischen Abschnitt des Aufsatzes (3) mehrere Distanzrippen (5), vorzugsweise regelmäßig zueinander beabstandet, ausgebildet sind.

5. Kraftstoffbefüllvorrichtung (1) nach zumindest einem der vorhergehenden Ansprüche,
**dadurch gekennzeichnet, dass** mehrere Spalte (4) durch die Beabstandung der Distanzrippen (5) zueinander und der Beabstandung des ersten Endes (A) des Aufsatzes (3) zur Strömungsleiteinrichtung (2) aufgrund der Distanzrippen (5) gebildet werden.

6. Kraftstoffbefüllvorrichtung (1) nach zumindest einem der vorhergehenden Ansprüche,
**dadurch gekennzeichnet, dass** der Aufsatz (3) mittels einer Verrastungseinrichtung (6) mit der Strömungsleiteinrichtung (2) verbunden ist.

7. Kraftstoffbefüllvorrichtung (1) nach zumindest einem der vorhergehenden Ansprüche,
**dadurch gekennzeichnet, dass** die Verjüngung (B) des Aufsatzes (3) im Wesentlichen die Form einer Kegelstumpfmantelfläche aufweist.

8. Kraftstoffbefüllvorrichtung (1) nach zumindest einem der vorhergehenden Ansprüche,
**dadurch gekennzeichnet, dass** das zweite Ende (C) nach der Verjüngung (B) einen zylindrischen Abschnitt bildet.

9. Kraftstoffbefüllvorrichtung (1) nach zumindest einem der vorhergehenden Ansprüche,
**dadurch gekennzeichnet, dass** die Strömungsleiteinrichtung (2) so ausgebildet ist, dass das Ende des Auslaufrohres der Zapfpistole nicht über die Strömungsleiteinrichtung (2) ragen kann.

## Claims

1. Fuel filling device (1) comprising a filling line, a flow guiding apparatus (2) arranged in the filling line, wherein the flow guiding apparatus (2) is designed such that, during a fuelling process, the delivery tube of a fuelling nozzle is guided, and received in a supported manner, therein, and an attachment (3) for the flow guiding apparatus (2), wherein the attachment (3) has a first end (A), which is arranged radially at the outside on the flow guiding apparatus (2), wherein the attachment (3) has a second end (C), wherein the attachment (3) narrows from the first end (A) to the second end (C) via a narrowing portion (B), **characterized in that** at least one gap (4) is formed between the first end (A) of the attachment (3) and the flow guiding apparatus (2), with the result that, during a fuelling process, the fuel vapour introduced into the fuel filling device (1) during the fuelling process can flow through the at least one gap (4) into the filling line in the direction of a fuel tank connected to the filling line.

2. Fuel filling device (1) according to Claim 1, **characterized in that** the first end (A) of the attachment (3) forms a substantially cylindrical portion.

3. Fuel filling device (1) according to Claim 1 or 2, **characterized in that** at least one spacer rib (5) is arranged in the first end (A) of the attachment (3), wherein the spacer rib (5) extends radially inwards, that is to say in the direction of the flow guiding apparatus (2).

4. Fuel filling device (1) according to Claim 3, **characterized in that** multiple spacer ribs (5) are formed, preferably spaced apart from one another at regular intervals, in the cylindrical portion of the attachment (3).

5. Fuel filling device (1) according to at least one of the preceding claims,
**characterized in that** multiple gaps (4) are formed by the spacing of the spacer ribs (5) to one another and by the spacing of the first end (A) of the attachment (3) to the flow guiding apparatus (2) due to the spacer ribs (5).

6. Fuel filling device (1) according to at least one of the preceding claims,
**characterized in that** the attachment (3) is connected to the flow guiding apparatus (2) by means of a locking apparatus (6).

7. Fuel filling device (1) according to at least one of the preceding claims,
**characterized in that** the narrowing portion (B) of the attachment (3) has substantially the shape of a frustoconical lateral surface.

8. Fuel filling device (1) according to at least one of the preceding claims,
**characterized in that** the second end (C), after the narrowing portion (B), forms a cylindrical portion.

9. Fuel filling device (1) according to at least one of the preceding claims,
**characterized in that** the flow guiding apparatus (2) is designed such that the end of the delivery tube of the fuelling nozzle cannot project beyond the flow guiding apparatus (2).

## Revendications

1. Dispositif de remplissage de carburant (1), comprenant une conduite de remplissage, un dispositif de guidage d'écoulement (2) disposé dans la conduite de remplissage, le dispositif de guidage d'écoulement (2) étant réalisé de telle sorte que pendant le ravitaillement, le tuyau d'évacuation d'un pistolet distributeur est reçu en étant guidé et soutenu dans celui-ci, et un embout (3) pour le dispositif de guidage d'écoulement (2),
dans lequel l'embout (3) présente une première extrémité (A) disposée radialement à l'extérieur sur le dispositif de guidage d'écoulement (2), l'embout (3) présentant une deuxième extrémité (C), l'embout (3) se rétrécissant de la première extrémité (A) à la deuxième extrémité (C) en passant par un rétrécissement (B),
**caractérisé en ce qu'**au moins un interstice (4) est réalisé entre la première extrémité (A) de l'embout (3) et le dispositif de guidage d'écoulement (2), de sorte que la vapeur de carburant introduite dans le dispositif de remplissage de carburant (1) pendant le ravitaillement peut s'écouler pendant un ravitaillement à travers ledit au moins un interstice (4) dans la conduite de remplissage en direction d'un réservoir de carburant relié à la conduite de remplissage.

2. Dispositif de remplissage de carburant (1) selon la revendication 1, **caractérisé en ce que** la première extrémité (A) de l'embout (3) forme une partie réalisée de manière substantiellement cylindrique.

3. Dispositif de remplissage de carburant (1) selon la revendication 1 ou 2, **caractérisé en ce qu'**au moins une nervure d'écartement (5) est disposée dans la première extrémité (A) de l'embout (3), la nervure d'écartement (5) s'étendant radialement vers l'intérieur, donc en direction du dispositif de guidage d'écoulement (2).

4. Dispositif de remplissage de carburant (1) selon la revendication 3, **caractérisé en ce que** dans la partie cylindrique de l'embout (3), plusieurs nervures d'écartement (5) sont réalisées, de préférence en étant espacées régulièrement les unes par rapport aux autres.

5. Dispositif de remplissage de carburant (1) selon au moins l'une des revendications précédentes, **caractérisé en ce que** plusieurs interstices (4) sont formés par l'espacement des nervures d'écartement (5) les unes par rapport aux autres, et l'espacement de la première extrémité (A) de l'embout (3) par rapport au dispositif de guidage d'écoulement (2), en raison des nervures d'écartement (5).

6. Dispositif de remplissage de carburant (1) selon au moins l'une des revendications précédentes, **caractérisé en ce que** l'embout (3) est relié au dispositif de guidage d'écoulement (2) au moyen d'un dispositif d'enclenchement (6).

7. Dispositif de remplissage de carburant (1) selon au moins l'une des revendications précédentes, **caractérisé en ce que** le rétrécissement (B) de l'embout (3) présente substantiellement la forme d'une surface latérale de cône tronqué.

8. Dispositif de remplissage de carburant (1) selon au moins l'une des revendications précédentes, **caractérisé en ce que** la deuxième extrémité (C) forme une partie cylindrique après le rétrécissement (B).

9. Dispositif de remplissage de carburant (1) selon au moins l'une des revendications précédentes, **caractérisé en ce que** le dispositif de guidage d'écoulement (2) est réalisé de telle sorte que l'extrémité du tuyau d'évacuation du pistolet distributeur ne peut pas dépasser du dispositif de guidage d'écoulement (2).
